# EUROPEAN PATENT APPLICATION

(11) **EP 2 259 171 A1**
(43) Date of publication of application: **08.12.2010**
(21) Application number: 09724736.5
(22) Date of filing: 26.03.2009
(51) Int. Cl.: G06F 3/041, G02F 1/1333, G09F 9/00

(54) **TOUCH PANEL AND TOUCH PANEL DISPLAY DEVICE**

(30) Priority: 26.03.2008 JP 2008079601
(71) Applicant: Kyocera Corporation, Kyoto-shi Kyoto 612-8501 (JP)
(72) Inventor: NOZAWA, Junichi, Kirishima-shi Kagoshima 899-5195 (JP)
(74) Representative: HOFFMANN EITLE
(86) International application number: PCT/JP2009/056184
(87) International publication number: WO 2009/119769

(57) **Abstract**

A touch panel (X) according to one embodiment of the present invention includes a first substrate (11) and a second substrate (12). The first substrate (11) includes a first principal surface (15), a second principal surface (16), and at least one recess (17) formed on the second principal surface 16. The second substrate (12) is arranged to face the first principal surface (15). The touch panel (X) further includes at least one light diffusing particle (18). At least a portion of the light diffusing particle is arranged in the recess (17). The first substrate (11) includes glass. The light diffusing particle (18) is preferred to have a polyhedral shape. A formation material of the light diffusing particle (18) is preferred to be the same as a formation material of the first substrate (11).

## Description

### TECHNICAL FIELD

The present invention relates to a touch panel that is disposed on a display screen such as a liquid crystal display. Further, the present invention reflates to a touch panel type display device including the touch panel.

### BACKGROUND ART

As an example of a screen input type display device, a display device including a touch panel is known. The touch panel is configured to detect input coordinates on the basis of a change in resistance by, for example, a pressing operation. Some touch panels have a structure in which transparent conductive films of an upper substrate and a lower substrate, respectively, are arranged to face each other.

In recent years, in terms of increasing the image definition and improving durability, there is proposed a touch panel that has an upper substrate made of glass, as disclosed in Japanese Laid-open Patent Publication No. 09-146707. This touch panel is superior to a touch panel having an upper substrate made of a resin film, in terms of an image definition or durability. However, reflected glare (external light reflection) may be easily caused in the touch panel.

Meanwhile, an example of a technology for suppressing the reflected glare in the touch panel is disclosed in Japanese Laid-open Patent Publication No. 08-332649. According to this technology, a touch substrate to be pressed is injection molded using a transparent resin to form minute unevenness on a top surface (touch surface) of the touch substrate.

However, if the technique of forming the minute unevenness in the touch substrate is applied, the touch substrate may become relatively weak as compared with the case where the minute unevenness is not formed. For this reason, when the touch substrate is pressed and deformed, cracks may occur in the touch substrate and the touch substrate may easily be damaged. As a result, reliability of the touch panel may be lowered.

### DISCLOSURE OF THE INVENTION

It is an object of the present invention to provide a touch panel that reduces reflected glare and improves reliability.

A touch panel according to an embodiment of the present invention relates to a touch panel that includes a first substrate and a second substrate. The first substrate includes a first principal surface and a second principal surface. The second principal surface is on a back side of the first principal surface. At least one recess is formed on the second principal surface. The second substrate is arranged to face the first principal surface.

The touch panel further includes at least one light diffusing particle. At least a portion of the light diffusing particle is positioned in the recess.

In the touch panel according to one embodiment of the present invention, there exists the light diffusing particles and the recesses in the first substrate. As a result, the reflected glare can be reduced. Further, in the touch panel, at least some of the light diffusing particles are arranged in the recesses of the first substrate. As a result, the pressing force that acts on the first substrate when the first substrate is deformed by a pressing operation is dispersed, and concentration of the stress at corners of the recesses can be eased. Therefore, in the touch panel, reflected glare can be reduced and reliability can be improved.

A touch panel type display device according to an embodiment of the present invention relates to a touch panel type display device that includes the touch panel and a display panel.

The touch panel type display device according to an embodiment of the present invention includes the touch panel. Therefore, the same effect as that of the above-described touch panel can be achieved. That is, in the touch panel type display device, reflected glare can be reduced and reliability can be improved.

### BRIEF DESCRIPTION OF DRAWINGS

FIG. 1 is an exploded perspective view of a touch panel according to an embodiment of the present invention;
FIG. 2 is a cross-sectional view taken along the line II-II of FIG. 1;
FIG. 3 is a cross-sectional view taken along the line III-III of FIG. 1;
FIG. 4 is a cross-sectional view taken along the line IV-IV of FIG. 1;
FIG. 5 is a cross-sectional view illustrating a process of bonding a first base and a second base in the touch panel shown in FIG. 1;
FIG. 6 is a cross-sectional view of a touch panel type display device including the touch panel in FIG. 1;
FIG. 7 is a perspective view of a liquid crystal display panel of a liquid crystal display device in the touch panel type display device in FIG. 6; and
FIG. 8 is an enlarged cross-sectional view of essential parts of the liquid crystal display panel in FIG. 7.

### EXPLANATIONS OF LETTERS OR NUMERALS

- X: Touch panel
- Y: Touch panel type display device
- 10: First base
- 11: Transparent insulating substrate (first substrate)
- 13: Adhesive member
- 14: Polarizing film (optical film)
- 15: First principal surface
- 16: Second principal surface
- 17: Recess
- 18: Light diffusing particle
- 20: Second base
- 21: Transparent insulating substrate (second substrate)
- 40: Liquid crystal display panel

### BEST MODE(S) FOR CARRYING OUT THE INVENTION

Hereinafter, a touch panel and a touch panel type display device according to an embodiment of the present invention will be described with reference to the drawings.

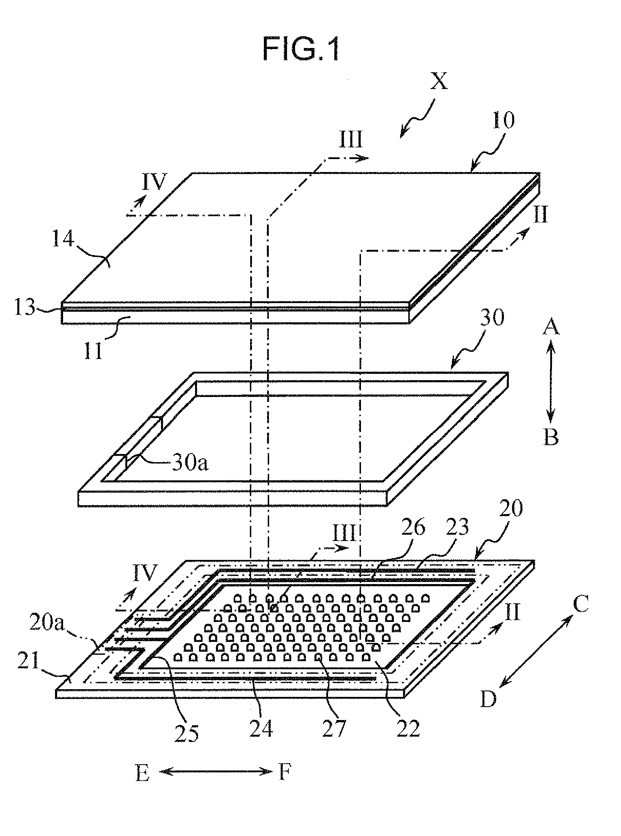

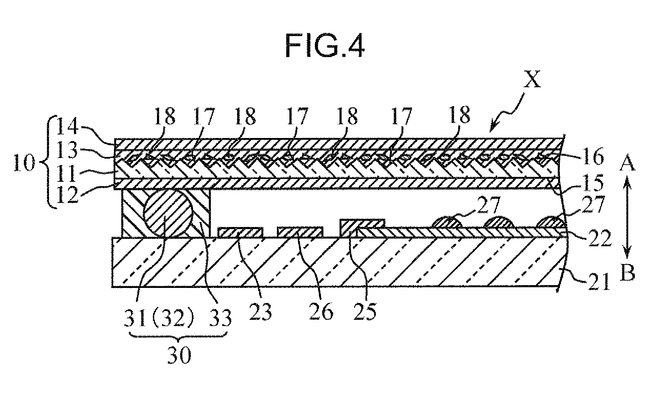

First, a touch panel according to an embodiment of the present invention will be described with reference to FIGS. 1 to 4.

A touch panel X includes a first base 10, a second base 20, and a conductive adhesive member 30.

The first base 10 includes a transparent insulating substrate 11 (first substrate), a transparent electrode 12, an adhesive member 13, and a polarizing film (optical film) 14, and is flexible as a whole. The first base 10 has a substantially rectangular shape in plan view. However, the shape of the first base 10 in plan view is not limited to the rectangular shape.

The transparent insulating substrate 11 performs a function of supporting the transparent electrode 12 and has a sufficient electric insulating property. The transparent insulating substrate 11 has a first principal surface 15 that faces the second base 20 and a second principal surface 16 that is positioned at an opposite side of the first principal surface 15. The distance (thickness of the transparent insulating substrate 11) of the first principal surface 15 and the second principal surface 16 is set to a value between greater than or equal to 0.1 mm and less than or equal to 0.3 mm to secure sufficient shape stability and flexibility. As a material for forming the transparent insulating substrate 11, a glass material, such as soda glass, recycled glass, crystal glass, semi-crystal glass, tempered glass, alkali-free glass, quartz glass, and borosilicate glass, is exemplified. The material for forming the transparent insulating substrate 11 is not limited to the glass material, and the transparent insulating substrate 11 may be formed of a resin material.

The transparent insulating substrate 11 has a light transmitting property in a thickness direction (AB direction), and has recesses 17 that are formed on the second principal surface 16.

The recesses 17 are to suppress occurrence of Newton's rings, and to suppress reflected glare. The recesses 17 are scattered substantially all over the entire surface of the second principal surface 16. For example, the recesses 17 are provided to be scattered in a region of the second principal surface 16 where the transparent electrode 12 and a transparent electrode 22 to be described below face each other and a region of the second principal surface 16 where the transparent electrode 12 and the transparent electrode 12 do not face each other. Of course, the recesses 17 may be provided only in the region of the second principal surface 16 where the transparent electrode 12 and the transparent electrode 22 face each other, as long as the occurrence of Newton's rings can be appropriately reduced. Here, if the recesses 17 are scattered substantially all over the entire surface of the second principal surface 16, the external light reflection state or gloss in the surface of the transparent insulating substrate 11 may be homogenized. The transparent insulating substrate 11 can have constant rigidity all over the entire region of the transparent insulating substrate, and concentration of stress can be moderated. As a result, reliability can be improved.
The recesses 17 can be formed by etching, grinding, or abrading processing. Due to formation of the recesses 17, the surface roughness Ra of the second principal surface 14 is between greater than or equal to 0.2 nm and less than or equal to 0.35 µm. The surface roughness Ra is measured by JIS-B-0601.

The transparent electrode 12 contributes to detection of potential at a contact point of the transparent electrode 12 and the transparent electrode 22 of the second base 20 to be described below, and has a light transmitting property in the AB direction. The transparent electrode 12 is formed to spread substantially all over the entire surface of the first principal surface 15 of the transparent insulating substrate 11, using a conductive material having a predetermined electric resistance. A resistance value of the transparent electrode 12 is between greater than or equal to 200 Ω/□ and less than or equal to 1500 Ω/□. The thickness of the transparent electrode 12 is set to 2.0 × 10⁻² µm or less, in order to increase the resistance. As a material for forming the transparent electrode 12, a light transmitting conductive material, such as indium tin oxide (ITO), antimony tin trioxide (ATO), SnO, and ZnO, is exemplified.

The adhesive member 13 serves to bond the polarizing film 14 to the second principal surface 16 of the transparent insulating substrate 11. The adhesive member 13 has an adhesive material and a plurality of slight diffusing particles 18 that are dispersed in the adhesive material. The light diffusing particles 18 are partially confined in the recesses 17 of the second principal surface 16.

As a material for forming the adhesive member 13, a pressure sensitive adhesive, such as an acrylic pressure sensitive adhesive, a urethane pressure sensitive adhesive, and a silicon pressure sensitive adhesive, and a watersoluble adhesive, such as a polyvinyl alcohol adhesive, are exemplified.

The light diffusing particles 18 perform a function of diffusing light. Preferably, the light diffusing particles 18 are substantially uniformly dispersed in the adhesive material. At least a portion of the light diffusing particles 18 are confined in the recesses 17. For example, one of the light diffusing particles 18 may be entirely confined in one of the recesses 17, or one of the plural light diffusing particles 18 may be partially confined in one of the recesses 17. Alternatively, the plurality of the light diffusing particles 18 may be confined in one of the recesses 17. If the plurality of the light diffusing particles 18 is confined in the one of the recesses 17, a dead space between the light diffusing particles 18 and an inner surface of the recesses 17 can be reduced.

As a material for forming the light diffusing particles 18, a glass material, silica, or a silicon resin can be exemplified. As the glass material for the light diffusing particles 18, the same glass material as the material for forming the transparent insulating substrate 11 can be used.

As a shape of the light diffusing particles 18, a substantially polyhedral shape and a substantially spherical shape are exemplified. A sectional area of the light diffusing particles 18 is smaller than an opening area of the recesses 17. For example, a maximum sectional area of the light diffusing particles 18 is smaller than the opening area of the recesses 17. If the substantially polyhedral shape is employed as the shape of the light diffusing particles 18, a dead space between the adjacent light diffusing particles 18 or between the light diffusing particles 18 and the inner surface of the recesses 17 can be reduced. For this reason, the large amount of light diffusing particles 18 can be positioned in the recesses 17 and the transparent insulating substrate 11 can be suppressed from being damaged. Thereby, reliability of the touch panel X can be improved.

As the light diffusing particles 18 in the touch panel X, processing pieces that are generated by a process of grinding or polishing a portion of the transparent insulating substrate 11 may be used.

The polarizing film 14 selectively transmits light in a predetermined vibration direction, and is formed of, for example, an iodine material. The polarizing film 14 is formed to have the surface roughness Ra in a range between greater than or equal to 0.2 nm and less than or equal to 0.35 µm. The surface roughness Ra is measured by JIS-B-0601, as similar to the second principal surface 16. In the touch panel X using the polarizing film 14 that has the surface roughness Ra in the above range, an optical influence due to undulating of the polarizing film 14 can be sufficiently reduced.

The second base 20 includes a transparent insulating substrate (second substrate) 21, a transparent electrode 22, line electrodes 23, 24, 25, and 26, and dot spacers 27. The second base 20 is disposed to face the first base 10. The second base 20 is also configured to have an approximately rectangular shape in plan view. However, the shape of the second base 20 in plan view is not limited to the rectangular shape, similar to the first base 10. In the second base 20, an external conductive region 20a that is a region electrically connected to a flexible printed circuit (FPC) not illustrated is provided.

The transparent insulating substrate 21 performs a function of supporting the transparent electrode 22, the line electrodes 23 to 26, and the dot spacers 27, and has a light transmitting property and an electric insulating property in a thickness direction (AB direction). As a material for forming the transparent insulating substrate 21, light transmitting glass or light transmitting plastic is exemplified. However, the material for forming the transparent insulating substrate 21 is preferably the light transmitting glass from the viewpoint of heat resistance. When the light transmitting glass is used as the material for forming the transparent insulating substrate 21, the thickness of the transparent insulating substrate 21 is preferably set to 0.7 mm or more to secure sufficient shape stability.

The transparent electrode 22 contributes to detection of potential at a contact point of the transparent electrode 22 and the transparent electrode 12 of the first base 10, and has a light transmitting property in a thickness direction (AB direction). As a material for forming the transparent electrode 22, the same material as the transparent electrode 12 is exemplified. The transparent electrode 22 is formed in a region of the second base 20 corresponding to a formation region of the transparent electrode 12 of the first base 10, in plan view.

Each of the line electrodes 23 and 24 performs a function of applying a voltage to the transparent electrode 12. One end of the line electrode 23 is positioned in an end region of a connection region, in a direction of an arrow C, that is defined by a conductive connecting member 30 to be described below, in the second base 20, and the other end of the line electrode 23 is positioned in the external conductive region 20a of the second base 20. One end of the line electrode 24 is positioned in an end region of the connection region, in a direction of an arrow D, that is defined by the conductive connecting member 30 to be described below, in the second base 20, and the other end of the line electrode 24 is positioned in the external conductive region 20a of the second base 20.

A resistance value between both ends of each of the line electrodes 23 and 24 is preferably set to be equal to or less than 1/100 of the resistance value between both ends of the transparent electrode 12, from the viewpoint of precision in detection of the touch panel X. Here, between both ends of the transparent electrode 12 means between one end and the other end of a region of the transparent electrode 12 corresponding to the line electrodes 23 and 24.

Each of the line electrodes 23 and 24 is composed of a thin metal film (width in a range between greater than or equal to 0.5 mm and less than or equal to 2.0 mm, and thickness in a range between greater than or equal to 0.5 µm and less than or equal to 2 µm), from the viewpoint of hardness and shape stability. As the thin metal film, an aluminum film, an aluminum alloy film, a laminated film of a chromium film and an aluminum film, or a laminated film of a chromium film and an aluminum alloy film is exemplified. When the transparent electrode 22 is formed with ITO, the thin metal film is preferably the laminated film of the chromium film and the aluminum film (chromium film is disposed between the ITO and the aluminum film) or the laminated film of the chromium film and the aluminum alloy film (chromium film is disposed between the ITO and the aluminum alloy film), from the viewpoint of adhesion with the ITO. As a method of forming the thin metal film, a sputtering method, a deposition method or a chemical vapor deposition (CVD) method is exemplified.

Each of the line electrodes 25 and 26 performs a function of applying a voltage to the transparent electrode 22. One end of the line electrode 25 is connected to an end of the transparent electrode 22, in a direction of an arrow E, and the other end of the line electrode 25 is positioned in the external conductive region 20a of the second base 20. One end of the line electrode 26 is connected to an end of the transparent electrode 22, in a direction of an arrow F, and the other end of the line electrode 26 is positioned in the external conductive region 20a of the second base 20. Each of the line electrodes 25 and 26 is composed of a thin metal film (width in a range between greater than or equal to 0.5 mm and less than or equal to 2.0 mm, and thickness in a range between greater than or equal to 0.5 µm and less than or equal to 2 µm), similar to the line electrodes 23 and 24. As the thin metal film, the same thin film as the thin metal film constituting the line electrodes 23 and 24 is exemplified.

A resistance value between both ends of each of the line electrodes 25 and 26 is preferably set to be equal to or less than 1/100 of the resistance value between both ends of the transparent electrode 22, from the viewpoint of detection precision of the touch panel X. In this case, between both ends of the transparent electrode 22 means between one end and the other end of a region of the transparent electrode 22 corresponding to the line electrodes 25 and 26.

The dot spacers 27 reduce an unnecessary contact of the transparent electrode 12 to the transparent electrode 22 at the outside of the predetermined position, in the case where the transparent electrode 12 and the transparent electrode 22 contact at the predetermined position at the time of inputting information. The dot spacers 27 are arranged in a matrix where the distance (arrangement pitch) between the adjacent dot spacers 27 is in a range between greater than or equal to 2 mm and less than or equal to 4 mm, on the transparent substrate 22. The dot spacers 27 may be formed in the first base 10. The dot spacers 27 preferably perform the above function in an invisible state. For example, the dot spacers 27 are formed in a semispherical shape in which the diameter is 40 µm or less and the height is in a range be between greater than or equal to 1.0 µm and less than or equal to 3.5 µm.

As a material for forming the dot spacers 27, a thermosetting resin and an ultraviolet curable resin are exemplified. If the thermosetting resin is used as the material for forming the dot spacers 27, environment resistance such as heat resistance or drug resistance can be improved, which for example surely results in high reliability during a long period. As the thermosetting resin, an epoxy resin, unsaturated polyester, a urea resin, a melanin resin or a phenol resin is exemplified. Meanwhile, if the ultraviolet curable resin is used as the material for forming the dot spacers 27, curing time can be shortened as compared with the thermosetting resin. As a result, manufacturing efficiency can be improved. As the ultraviolet curable resin, an acrylic resin or an epoxy resin is exemplified.

The dot spacers 27 may include insulating particles. According to this configuration, shape stability of the dot spacers 27 can be enhanced without reducing an insulating property of the dot spacers 27. For this reason, the function of the dot spacers 27 can be maintained over a long period.

The conductive adhesive member 30 bonds the first base 10 and the second base 20 while electrically connecting the transparent substrate 12 and the line electrodes 23 and 24. The conductive adhesive member 30 is formed in a frame shape as a whole, and is provided to surround the transparent electrode 22 in plan view, from the viewpoint of sealing of the transparent substrate 12 and the transparent substrate 22. However, the conductive adhesive member 30 does not necessarily need to be formed in a frame shape, as long as the function thereof can be achieved.

The conductive adhesive member 30 that is formed in a frame shape as a whole has an opening 30a. The opening 30a is a portion through which air or the like is injected after the conductive adhesive member 30 is applied and the first base 10 and the second base 20 are bonded to each other. The opening 30a is sealed using the same material as that of the conductive adhesive member 30 or a non-conductive adhesive member (ultraviolet curable resin).

The conductive adhesive member 30 includes a first particle 31, a second particle 32, and an adhesive material 33.

The first particle 31 performs a function of electrically connecting the transparent electrode 12 and the line electrodes 23 and 24. In this embodiment, the first particle 31 is compressed and deformed by the first base 10 and the second base 20, in the course of manufacturing the first particle 31, as will be described below. However, in a state before the first particle 31 is deformed, the first particle 31 has a larger particle diameter than that of the second particle 32 to be described below. That is, the first particle 31 is compressed more strongly than the second particle 32, between the first base 10 and the second base 20. That is, in this embodiment, the first particle 31 has conductivity, and an elastic deformation ratio thereof is larger than that of the second particle 32. The first particle 31 can be obtained by coating a surface of a plastic ball with a conductor material (gold or nickel). In this embodiment, as the first particle 31, a particle having an approximately spherical shape is used from the viewpoint of damage suppression to the transparent electrode 12 and the line electrodes 23 and 24 contacting the first particle 31. However, the shape of the first particle 31 is not limited to the above shape, and the first particle 31 may have, for example, a polyhedral shape. The particle diameter of the first particle 31 in the normal state before deformation is in a range between greater than or equal to 3 µm and less than or equal to 20 µm.

The second particle 32 performs a function of defining the distance between the first base 10 and the second base 20, and has a particle diameter and an elastic deformation ratio smaller than those of the first particle 31. As the second particle 32, a silica sphere (spherical particle mainly made of silicon dioxide) is chosen from the viewpoint of definition easiness of the distance of the first base 10 and the second base 20. However, the present invention is not limited thereto and glass fiber may be used as the second particle 32. In this embodiment, as the second particle 32, a particle having an approximately spherical shape is used from the viewpoint of damage suppression to the transparent electrode 12 and the line electrodes 23 and 24 contacting the second particle 32. However, the shape of the second particle 32 is not limited to the above shape, and the second particle 32 may have, for example, a polyhedral shape. The particle diameter of the second particle 32 is in the range between greater than or equal to 2 µm and less than or equal to 19 µm.

The adhesive material 33 serves to enable bonding of the first base 10 and the second base 20. As the adhesive material 33, a thermosetting resin such as an epoxy resin or an ultraviolet curable resin such as an acrylic resin is exemplified. In particular, as the adhesive material 33, the thermosetting resin is preferably used from the viewpoint of work efficiency in a manufacturing process.

The conductive adhesive member 30 includes the first particle 31 and the second particle 32. However, the present invention is not limited thereto and the conductive adhesive member 30 may include only the first particle 31. According to this configuration, since only one kind of particles may be prepared, a cost can be reduced.

The conductive adhesive member 30 is not limited to the configuration where the first particle 31 directly contacts the transparent electrode 12. For example, the first particle 31 and the transparent electrode 12 may be electrically connected through lines formed on the transparent insulating substrate 11 in the above way as the line electrodes 23 and 24.

Next, an example of a method of bonding the first base 10 and the second base 20 by the conductive adhesive member 30 will be described. The conductive adhesive member 30 is obtained by dispersing the first particle 31 and the second particle 32 in the adhesive material 33. As the adhesive material 33, the thermosetting resin is used.

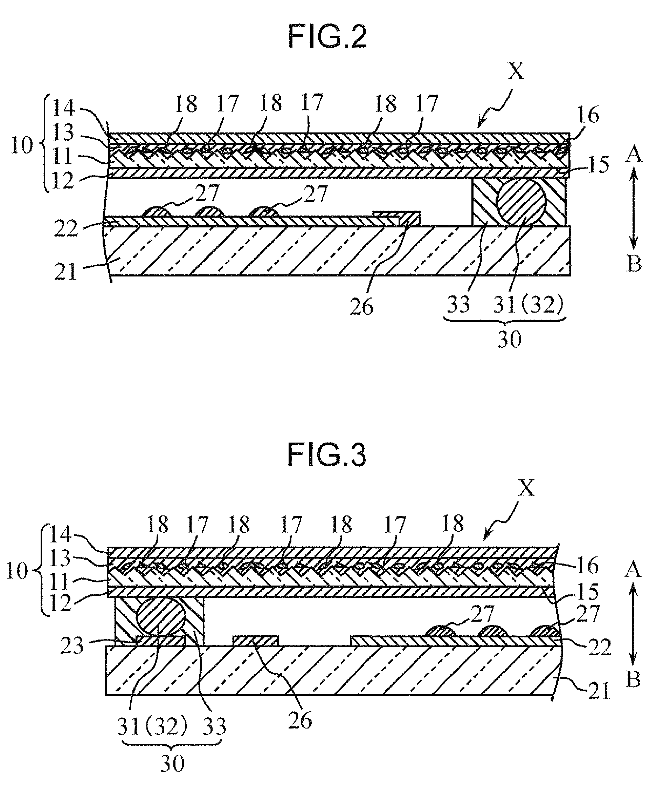

First, the adhesive material 33 including the first particle 31 and the second particle 32 are printed in a frame shape to surround the transparent electrode 22, on a top surface (formation surface of the line electrodes 23 and 24) of the second base 20, as shown in FIGS. 1 and 2.

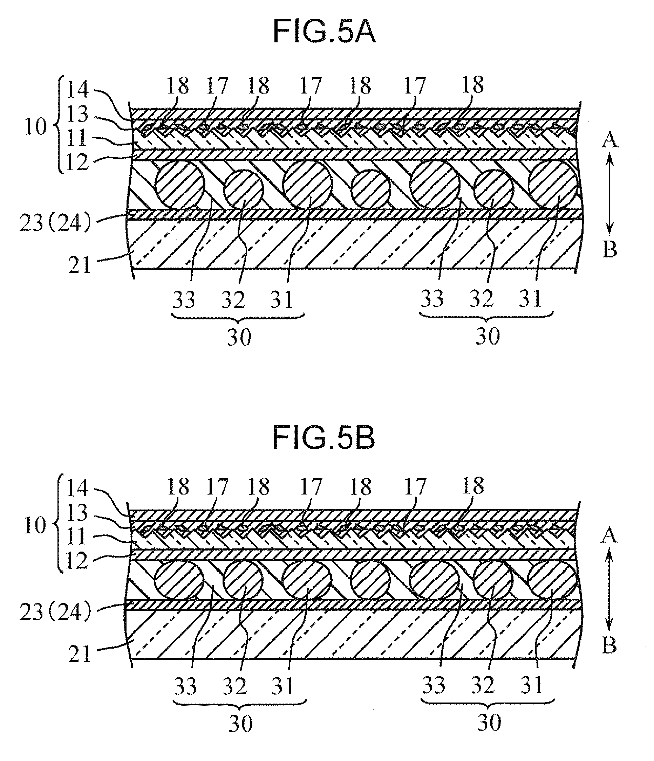

Next, as shown in FIG. 5A, after the first base 10 is aligned with the second base 20 where the adhesive material 33 is printed, the first base 10 and the second base 20 are bonded by the adhesive material 33 and a bonding structure is manufactured.

Next, as shown in FIG. 5B, the manufactured structure is pressurized in a direction in which the first base 10 and the second base 20 are in proximity to each other. In this embodiment, the pressurization is performed while the first particle 31 is deformed by the first base 10 and the second base 20 to increase an elastic deformation ratio or an aspect ratio of the first particle 31, until the second particle 32 comes into contact with both the first base 10 and the second base 20.

Next, the adhesive material 33 is heated to the hardening temperature thereof and is hardened, while a pressurization state is maintained. The first base 10 and the second base 20 are bonded by the hardening of the adhesive material 33. Meanwhile, the transparent electrode 12 and the line electrodes 23 and 24 are electrically connected by the first particle 31 interposed therebetween.

In the touch panel X, there exists the light diffusing particles 18 and the recesses 17 of the first substrate 11. Therefore, reflected glare can be reduced. Further, in the touch panel X, at least a portion of the light diffusing particles 18 is positioned in the recesses 17 of the first substrate 11. Therefore, the pressing force that acts on the first substrate 11 when the first substrate 11 is deformed by a pressing operation is dispersed, and concentration of the stress on corners of the recesses 17 can be moderated. Thus, in the touch panel X, reflected glare can be reduced and reliability can be improved.

In the touch panel X, when the formation material of the light diffusing particles 18 is the same as the formation material of the first substrate 11, even though the polarizing film 14 is bonded to the side of the second principal surface 16 of the first substrate 11 through an adhesive having a larger thermal expansion coefficient than the glass constituting the first substrate 11, the difference of the a thermal expansion coefficient of the material existing in the recesses 17 of the first substrate 11 and a thermal expansion coefficient of the first substrate 11 can be reduced. That is, in the touch panel X, the force that acts on the inner surfaces of the recesses 17 from the material existing in the recesses 17 of the first substrate 11 due to the difference of the thermal expansion coefficients can be reduced. Accordingly, in the touch panel X, if the same material as the formation material of the first substrate 11 is used as the formation material of the light diffusing particles 18, reliability can be improved.
In this case, the formation material of the light diffusing particles 18 being the same as the formation material of the first substrate 11 means that the formation material of the light diffusing particles 18 may be substantially the same as the formation material of the first substrate 11 or may be a material obtained by including an essentially necessary material in terms of manufacturing, such as an abrasive, in the formation material of the first substrate 11.

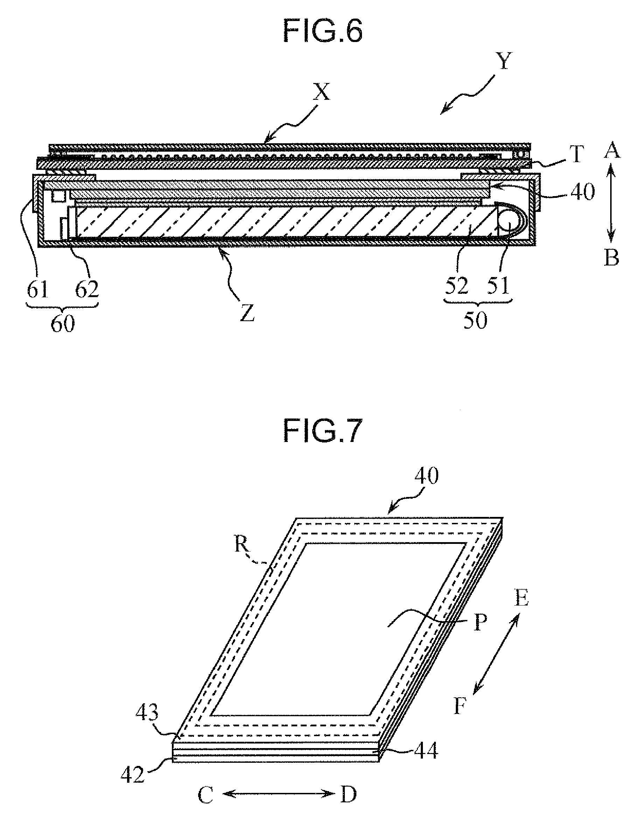

Next, a touch panel type display device Y according to one embodiment of the present invention will be described with reference to FIGS. 6 to 8.

The touch panel type display device Y shown in FIG. 6 includes a touch panel X and a liquid crystal display device Z. The liquid crystal display device Z includes a liquid crystal display panel 40, a backlight 50, and a casing 60.

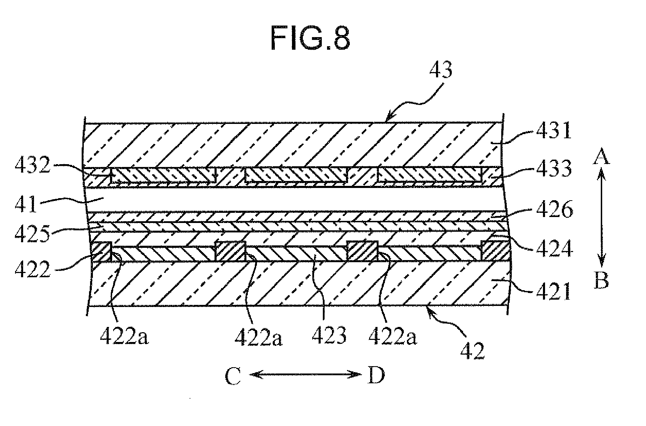

As shown in FIGS. 7 and 8, the liquid crystal display panel 40 has a display region P that includes a plurality of pixels to display an image, and includes a liquid crystal layer 41, a first base 42, a second base 43, and a sealing member 44.

The liquid crystal layer 41 is disposed between the first base 42 and the second base 43. The liquid crystal layer 41 has electrical, optical, mechanical or magnetic anisotropy, and includes liquid crystal that has regularity of a solid and fluidity of a liquid. As this liquid crystal, nematic liquid crystal, cholesteric liquid crystal or smectic liquid crystal is exemplified. In the liquid crystal layer 41, a spacer (not shown in the drawings) that includes a plurality of granular members may be interposed between the first substrate 42 and the second substrate 43 to constantly maintain the thickness of the liquid crystal layer 41.

The first base 42 includes a transparent substrate 421, a light shielding film 422, a color filter 423, a planarizing film 424, a transparent electrode 425, and an alignment film 426.

The transparent substrate 421 performs a function of supporting the light shielding film 422 and the color filter 423 and sealing the liquid crystal layer 41. The transparent substrate 421 has a light transmitting property in a thickness direction (AB direction). As a material for forming the transparent substrate 421, glass or light transmitting plastic is exemplified.

The light shielding film 422 performs a function of shielding light (maintaining the amount of transmitted light to a predetermined value or less), and is formed on a top surface of the transparent substrate 421. The light shielding film 422 has a through-hole 422a that is penetrated in a thickness direction (direction of an arrow AB), in order to transmit the light in a predetermined region. As a material for forming the light shielding film 422, a dye or a pigment having a color (for example, black) where a light shielding property is high, a resin (for example, acrylic resin) where carbon is added or Cr is exemplified.

The color filter 423 performs a function of selectively absorbing a predetermined wavelength of incident light and selectively transmitting only the predetermined wavelength. The color filter 423 is disposed in the through-hole 422a of the light shielding film 422. As the color filter 423, a red color filter (R) that selectively transmits a wavelength of red visible light, a green color filter (G) that selectively transmits a wavelength of green visible light or a blue color filter (B) that selectively transmits a wavelength of blue visible light is exemplified. The color filter 423 is formed by adding a dye or a pigment to an acrylic resin.

The planarizing film 424 performs a function of planarizing unevenness generated on a side of a top surface of the transparent substrate 421 by arranging the light shielding film 422 or the color filter 423. As a material for forming the planarizing film 424, a transparent resin, such as an acrylic resin, is exemplified.

The transparent electrode 425 performs a function of applying a predetermined voltage to the liquid crystal layer 41, and has a light transmitting property in the AB direction. The transparent electrode 425 is formed on the planarizing film 424. The transparent electrode 425 performs a function of propagating a predetermined signal (image signal) and has a portion that extends in a direction of an arrow CD of FIG. 6. As a material for forming the transparent electrode 425, a light transmitting conductive material, such as ITO and SnO, is exemplified.

The alignment film 426 performs a function of aligning liquid crystal molecules of the liquid crystal layer 41 oriented in a macroscopically random direction and having low regularity in a predetermined direction. The alignment film 426 is formed on the transparent electrode 425. As a material for forming the alignment film 426, a polyimide resin is exemplified.

The second base 43 includes a transparent substrate 431, a transparent electrode 432, and an alignment film 433.

The transparent substrate 431 performs a function of supporting the transparent electrode 432 and the alignment film 433, and sealing the liquid crystal layer 41. The transparent substrate 431 has a light transmitting property in a thickness direction (AB direction). As a material for forming the transparent substrate 431, the same material as the formation material of the transparent substrate 421 is exemplified.

The transparent electrode 432 performs a function of applying a predetermined voltage to the liquid crystal layer 41 together with the transparent electrode 425, and has a light transmitting property in the AB direction. The transparent electrode 432 performs a function of propagating a signal (scanning signal) to control a voltage application state (ON) or a voltage non-application state (OFF) with respect to the liquid crystal layer 41, and has a portion that extends in an EF direction of FIG. 6. As a material for forming the transparent electrode 432, the same material as the formation material of the transparent electrode 425 is exemplified.

The alignment film 433 performs a function of aligning liquid crystal molecules of the liquid crystal layer 41 in a predetermined direction together with the alignment film 426, and is formed on the transparent electrode 432. As a material for forming the alignment film 433, the same material as the formation material of the alignment film 426 is exemplified.

The sealing member 44 is provided in a frame shape to be positioned between the first base 42 and the second base 43, seals the liquid crystal layer 41, and performs a function of bonding the first base 42 and the second base 43 in a state where the first base 42 and the second base 43 are apart from each other at a predetermined interval. As a material for forming the sealing member 44, an insulating resin or a sealing resin is exemplified.

The backlight 50 shown in FIG. 6 irradiates light propagated in an A direction onto the liquid crystal display panel X. The backlight 50 includes a light source 51 and a light guiding plate 52. The backlight 50 adopts an edge light type where the light source 51 is disposed on the side of the light guiding plate 52. The light source 51 performs a function of emitting light to the light guiding plate 52. As the light source 51, a cathode fluorescent lamp (CFL), a light emitting diode (LED), a halogen lamp, a xenon lamp, or electro-luminescence (EL) is exemplified. The light guiding plate 52 performs a function of approximately equally guiding light from the light source 51 over the entire bottom surface of the liquid crystal display panel 40. The light guiding plate 52 generally includes a reflection sheet (not shown in the drawings) that is provided on a back surface thereof, a diffusion sheet (not shown in the drawings) that is provided on a surface thereof, and a prism sheet (not shown in the drawings) that is provided on the surface thereof. The reflection sheet reflects light, the diffusion sheet diffuses light to perform uniform surface emitting, and the prism sheet condenses light in an approximately constant direction. As a material for forming the light guiding plate 52, a transparent resin, such as an acrylic resin and a polycarbonate resin, is exemplified. The backlight 50 is not limited to the edge light type, and may adopt other type, such as a direct type, in which the light source 51 is disposed on the side of the back surface of the liquid crystal display panel 40.

The casing 60 performs a function of storing the liquid crystal display panel 40 and the backlight 50, and includes an upper casing 61 and a lower casing 62. As a material for forming the casing 60, a resin such as a polycarbonate resin or a metal such as stainless (SUS) and aluminum is exemplified.

Next, an example of a method of fixing the touch panel X to the liquid crystal display panel Z will be described. In the description below, a fixing member using a double-sided tape T is described, but the present invention is not limited to the fixing method using a double-sided tape T. For example, the method of fixing the touch panel X to the liquid crystal display panel Z may be a fixing method using an adhesive member, such as a thermosetting resin and an ultraviolet curable resin, or a method that physically fixes the touch panel X and the liquid crystal display device Z.

First, one surface of the double-sided tape T is bonded to a predetermined region on a top surface of the upper casing 61 of the liquid crystal display device Z. In this embodiment, the predetermined region is a region R that is positioned to surround the display region P of the liquid crystal display device Z (refer to FIG. 7).

Next, after the touch panel X is aligned to the liquid crystal display device Z where the double-sided tape T is bonded, the transparent insulating substrate 21 of the touch panel X and the upper casing 61 of the liquid crystal display device Z are bonded through the double-sided tape T. Thereby, the touch panel X is fixed to the liquid crystal display device Z.

Since the touch panel type display device Y according to the embodiment of the present invention includes the touch panel X, the same effect as the effect of the above-described touch panel X can be achieved. That is, in the touch panel type display device Y, reflected glare can be reduced and reliability can be improved.

The specific embodiment of the present invention has been described. However, the present invention is not limited thereto and various changes can be made without departing from the spirit of the present invention.

In the touch panel X, instead of the polarizing film 14, an optical function film (for example, AR (antireflection) film, a phase-difference film or a laminate thereof) or an HC (Hard coat) film may be formed.

In the touch panel X, a film that is subjected to anti-glare processing or reflection prevention coating may be further disposed in at least one of the first base 10 and the second base 20. According to this configuration, external light reflection can be reduced.

The transparent insulating bases 11 and 21 of the touch panel X may be replaced by any one of the phase-difference film, the polarizing film, and the film subjected to the anti-glare processing or the reflection prevention coat processing.

In the touch panel X, a phase-difference film may be further disposed in at least one of the first base 10 and the second base 20. The phase-difference film performs a function of converting a state of linearly polarized light whose state is converted into an elliptical polarization state by birefringence (phase shift) of the liquid crystal from the elliptical polarization state to a state similar to a linear polarization state. As a material for forming the phase-difference film, polycarbonate (PC), polyvinyl alcohol (PVA), polyarylate (PA), polysulfone (Psu) or polyolefin (PO) is exemplified. However, as the material for forming the phase-difference film, the PC is preferable from the viewpoint of consistency with wavelength dispersion of the liquid crystal, and the PO that has a photoelastic coefficient smaller than that of the PC is preferable from the viewpoint of adaptability with respect to a circularly polarizing plate. According to this configuration, a contrast ratio of a display image can be increased.

In the touch panel X, instead of the resistive type, other type, such as a capacitance type, an surface elastic wave type, an infrared type or an electromagnetic induction type, may be used.

In the touch panel type display device Y, instead of the liquid crystal display panel described above, a display panel, such as an EL (electro luminescence) display panel or a plasma display panel, which has a different display format, may be used as a display panel.

## Claims

1. A touch panel, comprising:
a first substrate comprising a first principal surface, a second principal surface positioned at a side opposite to the first principal surface, and at least one recess formed on the second principal surface;
a second substrate arranged to face the first principal surface; and
at least one light diffusing particle, at least a portion of the light diffusing particle is positioned in the recess.

2. The touch panel according to claim 1, wherein the first substrate includes glass.

3. The touch panel according to claim 1, wherein the light diffusing particle has a polyhedral shape.

4. The touch panel according to claim 1, wherein a constituent material of the light diffusing particle is the same as a constituent material of the first substrate.

5. The touch panel according to claim 1, further comprising: an optical film bonded to the second principal surface of the first substrate via an adhesive member, wherein a surface roughness Ra of a non-adhesive surface of the optical film is 0.35 µm or less.

6. The touch panel according to claim 5, wherein the adhesive member includes the light diffusing particle.

7. A touch panel type display device, comprising:
a display panel; and
a touch panel disposed to face the display panel, wherein the touch panel includes:
a first substrate comprising a first principal surface, a second principal surface positioned at a side opposite to the first principal surface, and at least one recess formed on the second principal surface;
a second substrate arranged to face the first principal surface, and is arranged to be closer to the display panel than the first substrate; and
at least one light diffusing particle, at least a portion of the light diffusing particle is positioned in the recess.

8. The touch panel type display device according to claim 7, wherein the first substrate includes glass.

9. The touch panel type display device according to claim 7, wherein the light diffusing particle has a polyhedral shape.

10. The touch panel type display device according to claim 7, wherein a constituent material of the light diffusing particle is the same as a constituent material of the first substrate.

11. The touch panel type display device according to claim 7, further comprising: an optical film bonded to the second principal surface of the first substrate via an adhesive member, wherein a surface roughness Ra of a non-adhesive surface of the optical film is 0.35 µm or less.

12. The touch panel type display device of claim 11, wherein the adhesive member includes the light diffusing particle.
